# EUROPEAN PATENT APPLICATION

(11) **EP 4 644 348 A1**
(43) Date of publication of application: **05.11.2025**
(21) Application number: 23912185.8
(22) Date of filing: 26.12.2023
(51) Int. Cl.: C03C 27/12, B32B 17/10, B60J 1/00

(54) **INTERMEDIATE FILM STRUCTURE FOR LAMINATED PANEL, LAMINATED PANEL STRUCTURE, AND PROJECTION SYSTEM FOR AUTOMOBILE ROOF GLASS**

(30) Priority: 28.12.2022 JP 2022212604
(71) Applicant: Sekisui Chemical Co., Ltd., Osaka-shi, Osaka 530-8565 (JP)
(72) Inventor: IZU, Yasuyuki, Mishima-gun, Osaka 618-0021 (JP); NAKAJIMA, Daisuke, 6041LE Roermond (NL); TOMURA, Kazuhiro, 6045JB Roermond (NL); YANAI, Masashi, 6041LE Roermond (NL)
(74) Representative: Ter Meer Steinmeister & Partner
(86) International application number: PCT/JP2023/046772
(87) International publication number: WO 2024/143407

(57) **Abstract**

Provided are: an interlayer film structure for a laminated panel, a laminated panel structure, and a projection system for automobile roof glass, which are capable of obtaining sufficient image clarity in a light scattering mode and sufficient transparent visibility in a light transmission mode. The interlayer film structure for a laminated structure is an interlayer film structure 1 to be used with being sandwiched between two transparent panels 30 and 31 and comprises a first thermoplastic sheet 10 disposed on an outdoor side A, a second thermoplastic sheet 11 disposed on an indoor side B, and a polymer-dispersed liquid crystal film 20 arranged between the first thermoplastic sheet 10 and the second thermoplastic sheet 11, in which lightness L* of the first thermoplastic sheet 10 and the second thermoplastic sheet 11 are 90 or less, the visible light transmittance of the first thermoplastic sheet 10 is lower than the visible light transmittance of the second thermoplastic sheet 11, and the visible light transmittance of the second thermoplastic sheet 11 is 10% or more.

## Description

### Technical Field

The present invention relates to an interlayer film structure for a laminated panel, to be used with being sandwiched between two transparent panels, a laminated panel structure comprising the interlayer film structure for a laminated panel, and a projection system for automobile roof glass.

### Background Art

In vehicles such as automobiles, full glass top designs covering even a roof with glass, and seamless designs removing seams between glass and the body, have attracted attention, and the attraction has been focused on in particular roof designs. In a full glass top design structure having a large glass area of a roof portion, a space to arrange a mechanical shade such as a window opening and closing unit cannot be ensured, making it difficult to be practically introduced.

Therefore, since a large-area roof structure has a risk of being susceptible to flow in more sunlight and heat rays from overhead, an attempt to shield outside light by introduction of a dark-colored laminated panel structure or the like has been made, however, the use of dark-colored laminated panel structure makes it difficult to obtain an advantage of incorporating roof glass which provides a feeling of openness, and does not fully address the needs of users.

Then, as an alternative means to the mechanical shade, use of light control film such as a polymer-dispersed liquid crystal (PDLC) film also in roof glass has been investigated. The PDLC film generally operates in a light scattering mode in which liquid crystals are irregularly oriented when applied no voltage, resulting in strong light scattering, and in a light transmission mode in which liquid crystals are aligned and have high light transmittance when applied voltage, functioning as an alternative to sun visors. The PDLC film used as roof glass has a problem of impairing its aesthetics due to a yellowish appearance in a light scattering mode. Therefore, in order to inhibit the yellowish appearance of roof glass, a PDLC film including a blue layer (see, for example, Patent Literature 1) has been proposed.

### Citation List

### Patent Literature

PTL1: DE 202021104310 U1

### Summary of Invention

### Technical Problem

When roof glass with a PDLC film is used in a light scattering mode, a high haze value and low light transmittance result, so that the present inventors have investigated use of roof glass incorporating the PDLC film as a screen. Specifically, the present inventors have investigated irradiating roof glass that operates in a light scattering mode with light from a projector or the like to display characters, symbols, figures, images, and the like to create a vehicle space presentation for automobiles and the like.

However, the roof glass incorporating the PDLC film has the problem that sufficient image clarity cannot be obtained in a light scattering mode, and for example, even though the roof glass described in Patent Literature 1 is applied, the image clarity cannot be sufficiently high.

Then, the present invention has been made in consideration of the above-described problems, and an object of the present invention is to provide an interlayer film structure for a laminated panel, a laminated panel structure, and a projection system for automobile roof glass, which are capable of obtaining sufficient image clarity in a light scattering mode and sufficient transparent visibility in a light transmission mode.

### Solution to Problem

The present inventors have found as a result of diligent investigations that the aforementioned problems can be solved by a configuration in an interlayer film structure for a laminated panel to be used with being sandwiched between two transparent panels, comprising a specific first thermoplastic sheet disposed on an outdoor side, a specific second thermoplastic sheet disposed on an indoor side, and a polymer-dispersed liquid crystal film arranged between the first thermoplastic sheet and the second thermoplastic sheet, and have thus completed the present invention described below.
[1] An interlayer film structure for a laminated panel, to be used with being sandwiched between two transparent panels, comprising:
   a first thermoplastic sheet disposed on an outdoor side; a second thermoplastic sheet disposed on an indoor side; and a polymer-dispersed liquid crystal film arranged between the first thermoplastic sheet and the second thermoplastic sheet, lightness L* of the first thermoplastic sheet and the second thermoplastic sheet being 90 or less, a visible light transmittance of the first thermoplastic sheet being lower than a visible light transmittance of the second thermoplastic sheet, and the visible light transmittance of the second thermoplastic sheet being 10% or more.
[2] The interlayer film structure for laminated panel according to [1], wherein the visible light transmittance of the first thermoplastic sheet is 50% or less.
[3] The interlayer film structure for laminated panel according to [1] or [2], wherein a visible light transmittance measured with the polymer-dispersed liquid crystal film in a light transmission mode is 20% or less.
[4] The interlayer film structure for laminated panel according to any one of [1] to [3], for an automobile.
[5] A laminated panel structure comprising the interlayer film structure for a laminated panel according to any one of [1] to [4] and two transparent panels, wherein the interlayer film structure for a laminated panel is disposed with being sandwiched between the two transparent panels.
[6] The laminated panel structure according to [5], for roof glass.
[7] A projection system for automobile roof glass, comprising the laminated panel structure according to [6] for roof glass, and a light source that projects an image onto the laminated panel structure.

### Advantageous Effects of Invention

According to the present invention, there are provided an interlayer film structure for a laminated panel, a laminated panel structure, and a projection system for automobile roof glass, which are capable of obtaining sufficient image clarity in a light scattering mode and sufficient transparent visibility in a light transmission mode.

### Brief Description of Drawings

[Fig. 1] Fig. 1 is a schematic cross-sectional view illustrating the interlayer film structure for a laminated panel according to an embodiment of the present invention.
[Fig. 2] Fig. 2 is a schematic view illustrating an application of the interlayer film structure for a laminated panel according to an embodiment of the present invention.
[Fig. 3] Fig. 3 is a schematic cross-sectional view illustrating the projection system for automobile roof glass according to the present invention.

### Description of Embodiments

The present invention will be described below with reference to embodiments.

### <Interlayer film structure for laminated panel>

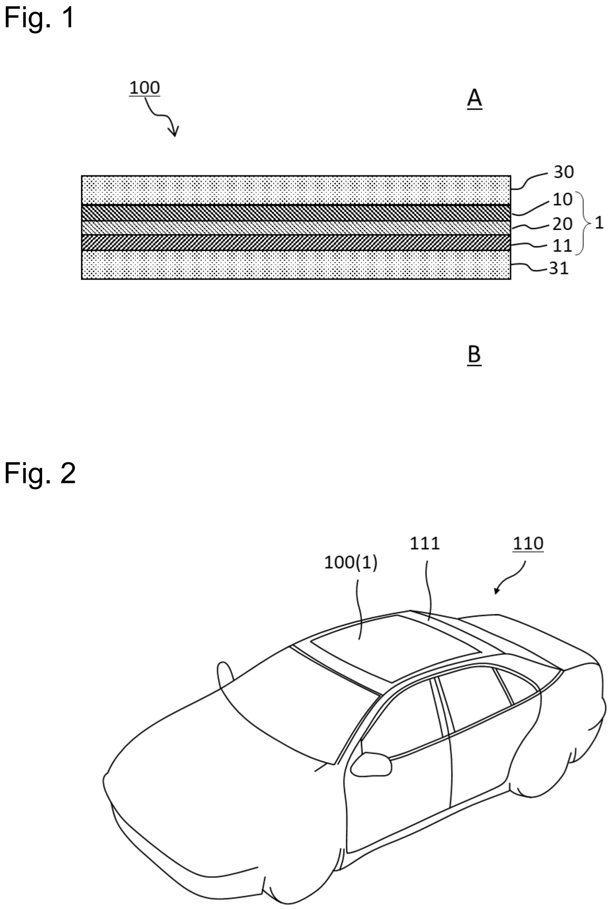

The interlayer film structure 1 for a laminated panel (hereinafter also referred to as an "interlayer film structure") according to an embodiment of the present invention is to be used with being sandwiched between two transparent panels 30 and 31 as shown in Fig. 1. The interlayer film structure 1 comprises a first thermoplastic sheet 10 disposed on the transparent panel 30 side, a second thermoplastic sheet 11 disposed on the transparent panel 31 side, and a polymer-dispersed liquid crystal film (hereinafter also referred to as a PDLC film) 20 arranged between the first thermoplastic sheet 10 and the second thermoplastic sheet 11.

In a laminated panel, the transparent panel 30 is disposed on the outdoor side A, and the transparent panel 31 on the indoor side. Therefore, the first thermoplastic sheet 10 is disposed on the outdoor side A, and the second thermoplastic sheet 11 is disposed on the indoor side B, and for example, when used for a vehicle such as an automobile, the first thermoplastic sheet 10 is disposed on an exterior side of the vehicle, and the second thermoplastic sheet 11 on an interior side of the vehicle.

### [L*a*b* of thermoplastic sheet]

The lightness L* of the first thermoplastic sheet 10 and the second thermoplastic sheet 11 are both 90 or less. When at least one of the lightness L* of the first thermoplastic sheet 10 and the second thermoplastic sheet 11 are greater than 90, sufficient image clarity cannot be obtained when the interlayer film structure 1 functions as a screen. From the viewpoint of obtaining sufficient image clarity, the lightness L* of the first thermoplastic sheet 10 and the second thermoplastic sheet 11 are preferably 85 or less, more preferably 80 or less, and still more preferably 75 or less. Also, from the viewpoint of enhancing the transparent visibility of the interlayer film structure 1, the lightness L* of the first thermoplastic sheet 10 and the second thermoplastic sheet 11 are preferably 20 or more, more preferably 30 or more, and still more preferably 50 or more.

The lightness L* of the first thermoplastic sheet 10 and the second thermoplastic sheet 11 may be the same as or different from each other. In the case of different lightness, either one may be higher; however, the lightness L* of the first thermoplastic sheet 10 is preferably lower than the lightness L* of the second thermoplastic sheet 11. In this case, a difference between the lightness L* of the first thermoplastic sheet 10 and the second thermoplastic sheet 11 is not particularly limited, but from the viewpoint of image clarity, it is preferably 4 or more and more preferably 8 or more.

Herein the lightness L* of the first thermoplastic sheet 10 and the second thermoplastic sheet 11 are obtained by measuring a laminated panel structure fabricated by sandwiching the first thermoplastic sheet 10 and the second thermoplastic sheet 11 respectively between two clear glass plates and bonding these. The lightness L* used herein is also defined by the CIE 1976 L*a*b* color system.

A specific method for measuring the lightness L* used herein is as described in Example to be described later.

Both the chromaticities a* of the first thermoplastic sheet 10 and the second thermoplastic sheet 11 as defined by the CIE 1976 L*a*b* color system are preferably -20 or more and 20 or less, more preferably -15 or more and 15 or less, and still more preferably -10 or more and 10 or less.

Both the chromaticities b* of the first thermoplastic sheet 10 and the second thermoplastic sheet 11 as defined by the CIE 1976 L*a*b* color system are preferably -20 or more and 20 or less, more preferably -15 or more and 15 or less, and still more preferably -10 or more and 10 or less.

Within the above ranges of chromaticities a* and chromaticities b* of the first thermoplastic sheet 10 and the second thermoplastic sheet 11, they have favorable appearances and favorable color reproducibility when functioning as a screen.

Herein the chromaticities a* and chromaticities b* of the first thermoplastic sheet 10 and the second thermoplastic sheet 11 are obtained by measuring a laminated panel structure fabricated by sandwiching the first thermoplastic sheet 10 and the second thermoplastic sheet 11 respectively between two clear glass plates and bonding these.

### [Visible light transmittance of thermoplastic sheet]

The visible light transmittance of the first thermoplastic sheet 10 is lower than the visible light transmittance of the second thermoplastic sheet 11. When the visible light transmittance of the first thermoplastic sheet 10 is higher than the visible light transmittance of the second thermoplastic sheet, sufficient image clarity cannot be obtained when the interlayer film structure 1 functions as a screen.

The visible light transmittances of the first thermoplastic sheet 10 and the second thermoplastic sheet 11 are obtained by measuring a laminated panel structure fabricated by sandwiching the first thermoplastic sheet 10 and the second thermoplastic sheet 11 respectively between two clear glass plates and bonding these. A method for measuring the visible light transmittance used herein is as described in Example to be described later.

The visible light transmittance (Tv₂) of the second thermoplastic sheet 11 is 10% or more. When the visible light transmittance (Tv₂) of the second thermoplastic sheet 11 is less than 10%, sufficient transparent visibility cannot be obtained when the interlayer film structure 1 functions in a light transmission mode. From the viewpoint of obtaining sufficient transparent visibility, the visible light transmittance (Tv₂) of the second thermoplastic sheet 11 is preferably 40% or more, more preferably 60% or more, and still more preferably 70% or more. Also, from the viewpoint of obtaining sufficient image clarity, the visible light transmittance (Tv₂) of the second thermoplastic sheet 11 is preferably 95% or less, more preferably 90% or less, and still more preferably 86% or less.

From the viewpoint of obtaining sufficient image clarity, the visible light transmittance (Tv₁) of the first thermoplastic sheet 10 is preferably 50% or less, more preferably 45% or less, and still more preferably 40% or less. Also, from the viewpoint of obtaining sufficient transparent visibility, the visible light transmittance (Tv₁) of the first thermoplastic sheet 10 is preferably 4% or more, more preferably 6% or more, and still more preferably 20% or more.

A difference (Tv₂ - Tv₁) between the visible light transmittance (Tv₂) of the second thermoplastic sheet 11 and the visible light transmittance (Tv₁) of the first thermoplastic sheet 10 is preferably 4% or more, more preferably 15% or more, and still more preferably 30% or more. The difference (Tv₂ - Tv₁) being the above lower limit value or more allows sufficient image clarity to be obtained when the interlayer film structure 1 functions as a screen.

A clear glass plate used in measurement of L*a*b* and visible light transmittance has a thickness of 2.5 mm and visible light transmittance of 90.5% measured in accordance with JIS R 3106:1998. The clear glass plate also has a* = -0.6, b* = 0.2, and a haze of 0.2% or less using CIE standard illuminant D65 and a 10° field of view color matching function, specified in JIS Z 8781-1 (2012), JIS Z 8781-2 (2012), and JIS Z 8781-4 (2013). This clear glass plate is also called standard clear glass.

### [Thermoplastic sheet]

As described above, the interlayer film structure 1 for a panel comprises a first thermoplastic sheet 10 and a second thermoplastic sheet 11.

The first thermoplastic sheet 10 and the second thermoplastic sheet 11 are layers containing a thermoplastic resin. The first thermoplastic sheet 10 and the second thermoplastic sheet 11 containing the thermoplastic resin facilitate them to function as adhesive layers, resulting in favorable adhesiveness between the PDLC film 20 and the transparent panels 30 and 31.

The thermoplastic resin is not particularly limited, but examples thereof include a polyvinyl acetal resin, an ethylene - vinyl acetate copolymer resin, an ionomer resin, a polyurethane resin, a thermoplastic elastomer, an acrylic resin, an acrylic - vinyl acetate copolymer resin, a polyvinyl alcohol resin, a polyolefin resin, a polyvinyl acetate resin, a polystyrene resin, and the like. Use of these resins facilitates adhesiveness thereof to the PDLC film 20 and the transparent panels 30 and 31 to be ensured.

In each of the first thermoplastic sheet 10 and the second thermoplastic sheet 11, the thermoplastic resin may be used singly or in combination of two or more thereof.

Of the resins described above, at least one selected from a polyvinyl acetal resin and an ethylene - vinyl acetate copolymer resin is also preferred, and particularly when used in combination with a plasticizer, from the viewpoint of exhibiting excellent adhesiveness to the transparent panels 30 and 31 composed of glass or the like, the polyvinyl acetal resin is more preferred.

A resin constituting the first thermoplastic sheet 10 and the second thermoplastic sheet 11 may be appropriately selected from the resins listed above. Also, the resins constituting each thermoplastic sheet may be different from each other, but are preferably the same. Therefore, the resins constituting the first thermoplastic sheet 10 and the second thermoplastic sheet 11 are preferably both polyvinyl acetal resins or ethylene - vinyl acetate copolymer resins and more preferably both polyvinyl acetal resins.

### (Polyvinyl acetal resin)

The polyvinyl acetal resin is not particularly limited as long as it is a polyvinyl acetal resin obtained by having acetalized a polyvinyl alcohol (PVA) with an aldehyde.

The above-described aldehyde is not particularly limited, but generally, an aldehyde having 1 to 10 carbon atoms is preferably used. The above aldehyde having 1 to 10 carbon atoms is not particularly limited, and examples thereof include n-butyl aldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetaldehyde, benzaldehyde, and the like. These aldehydes may be used singly or in combination of two or more thereof.

Of the aldehydes described above, n-butylaldehyde, n-hexylaldehyde, and n-valeraldehyde are preferred with n-butylaldehyde being more preferred. Therefore, the polyvinyl acetal resin is preferably a polyvinyl butyral resin.

The polyvinyl alcohol (PVA) is obtained, for example, by saponifying a polyvinyl ester such as polyvinyl acetate. The degree of saponification of polyvinyl alcohol is generally 70 to 99.9 mol%. The polyvinyl acetal resin may be used singly or in combination of two or more thereof.

An average degree of polymerization of PVA is preferably 200 or more, more preferably 500 or more, still more preferably 1,000 or more, and even still more preferably 1,500 or more. The average degree of polymerization being the above lower limit value or more allows penetration resistance of the laminated panel structure to be higher. Also, the average degree of polymerization of the PVA is preferably 5,000 or less, more preferably 4,000 or less, still more preferably 3,500 or less, and even still more preferably 2,500 or less.

The average degree of polymerization of the polyvinyl alcohol is determined by the method in accordance with JIS K 6726 "Testing methods for polyvinyl alcohol."

The amount of hydroxyl groups in the polyvinyl acetal resin is preferably 15 mol% or more and preferably 38 mol% or less. The amount of hydroxyl groups being 15 mol% or more is likely to results in favorable adhesiveness and favorable penetration resistance of the laminated panel structure. Also, the amount of hydroxyl groups of 38 mol% or less prevents the laminated panel structure from being too hard. From the viewpoint of adhesiveness to a glass plate, the amount of hydroxyl groups is more preferably 20 mol% or more and still more preferably 25 mol% or more. The amount of hydroxyl groups is also more preferably 35% or less and still more preferably 33 mol% or less.

In a case in which a polyvinyl butyral resin is used as the polyvinyl acetal resin, from the same viewpoint, the amount of hydroxyl groups is 15 mol% or more, preferably 38 mol% or less, more preferably 20 mol% or more, still more preferably 25 mol% or more, and more preferably 35% or less and still more preferably 33 mol% or less.

The amount of hydroxyl groups in the polyvinyl acetal resin is a value denoted as a percentage, which is a molar fraction calculated by dividing the amount of ethylene groups to which hydroxyl groups are bonded by the total amount of ethylene groups in the main chain. The amount of ethylene groups to which the hydroxyl groups are bonded can be measured, for example, in accordance with JIS K 6728 "Testing methods for polyvinyl butyral."

The degree of acetalization of the above polyvinyl acetal resin is preferably 47 mol% or more and preferably 85 mol% or less. The above degree of acetalization is more preferably 55 mol% or more and still more preferably 60 mol% or more, and more preferably 80 mol% or less and still more preferably 75 mol% or less.

It is to be noted that when an acetal group is a butyral group and a polyvinyl acetal resin (A) is a polyvinyl butyral resin, the degree of acetalization refers to a degree of butyralization.

The above-described degree of acetalization is a value denoted as a percentage, which is a molar fraction determined by dividing, by the total amount of ethylene groups in the main chain, a value obtained by subtracting from the total amount of ethylene groups in the main chain, the amount of ethylene groups to which hydroxyl groups are bonded and the amount of ethylene groups to which acetyl groups are bonded. The degree of acetalization (degree of butyralization) may be calculated from the results measured in accordance with, for example, JIS K 6728 "Testing methods for polyvinyl butyral".

The degree of acetylation of the polyvinyl acetal resin is preferably 30 mol% or less, more preferably 20 mol% or less, still more preferably 10 mol% or less, and even still more preferably 2 mol% or less. When the degree of acetylation is the above upper limit value or less, the interlayer film structure for a laminated panel and the laminated panel structure have high moisture resistance. Also, the degree of acetylation is not particularly limited, but is preferably 0.01 mol% or more and more preferably 0.1 mol% or more.

The degree of acetylation is a value denoted as a percentage, which is a molar fraction determined by dividing the amount of ethylene groups to which acetyl groups are bonded by the total amount of ethylene groups in the main chain. The amount of ethylene groups to which the acetyl groups are bonded can be measured, for example, in accordance with JIS K 6728 "Testing methods for polyvinyl butyral."

### (Ethylene - vinyl acetate copolymer resin)

The ethylene - vinyl acetate copolymer resin may be a non-crosslinked ethylene - vinyl acetate copolymer resin, or a high-temperature crosslinked ethylene - vinyl acetate copolymer resin. Also, as the ethylene - vinyl acetate copolymer resin, modified ethylene - vinyl acetate resins such as a saponified ethylene - vinyl acetate copolymer and a hydrolyzed ethylene - vinyl acetate can also be used.

The ethylene - vinyl acetate copolymer resin has a vinyl acetate content of preferably 10 to 50% by mass and more preferably 20 to 40% by mass, as measured in accordance with JIS K 6730 "Testing methods for ethylene - vinyl acetate resin" or JIS K 6924-2:1997. The vinyl acetate content of these lower limit values or more increases adhesiveness to glass and facilitates penetration resistance of the laminated panel structure to be favorable. Also, the vinyl acetate content of these upper limit values or less results in enhanced tensile strength of the interlayer film structure 1 and favorable impact resistance of the laminated panel structure.

### (Plasticizer)

Both the first thermoplastic sheet 10 and the second thermoplastic sheet 11 further preferably contain a plasticizer. Addition of the plasticizer allows the first thermoplastic sheet 10 and the second thermoplastic sheet 11 to be flexible, resulting in a flexible interlayer film structure 1 as well. Also, the use of interlayer film structure 1 for the laminated panel structure enhances flexibility of the laminated panel structure and penetration resistance thereof, further making it possible to exhibit high adhesiveness to the PDLC film 20 and the transparent panels 30 and 31.

In a case in which a polyvinyl acetal resin is used as the thermoplastic resin, the plasticizer is particularly effective when contained in each thermoplastic sheet. Therefore, the first thermoplastic sheet 10 more preferably contains a polyvinyl acetal resin and a plasticizer. It is also more preferable that the second thermoplastic sheet 11 also contains the polyvinyl acetal resin and the plasticizer.

Examples of the plasticizers include organic ester plasticizers such as a monobasic organic acid ester and a polybasic organic acid ester, phosphorus plasticizers such as an organophosphate plasticizer and an organophosphite plasticizer, and the like. Of these, the organic ester plasticizer is preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapriate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified alkyd sebacic acid, a mixture of a phosphoric acid ester and an adipic acid ester, an adipic acid ester of a mixture type, and the like. An example of the adipic acid ester of a mixture type includes an adipic acid ester formed of two or more alcohols selected from an alkyl alcohol having 4 to 9 carbon atoms and a cyclic alcohol having 4 to 9 carbon atoms.

Of the above-described plasticizers, triethylene glycol-di-2-ethylhexanoate (3GO) is particularly suitable for use.

The content of the plasticizer in each of the first thermoplastic sheet 10 and the second thermoplastic sheet 11 is not particularly limited, but is preferably 10 parts by mass or more and 100 parts by mass or less relative to 100 parts by mass of the thermoplastic resin. The content of the plasticizer being 10 parts by mass or more allows the interlayer film structure 1 to be moderately flexible. Therefore, the use of interlayer film structure 1 in the laminated panel structure results in favorable penetration resistance or the like of the laminated panel structure. Also, the content of the plasticizer of 100 parts by mass or less prevents the plasticizer from being separated from the thermoplastic sheet. The content of the plasticizer is more preferably 20 parts by mass or more, still more preferably 30 parts by mass or more, still more preferably 35 parts by mass or more, and more preferably 70 parts by mass or less, and still more preferably 63 parts by mass or less. The content of the plasticizer in each of the first thermoplastic sheet 10 and the second thermoplastic sheet 11 may be the same as or different from each other.

The first thermoplastic sheet 10 and the second thermoplastic sheet 11 each contains a resin, or the resin and a plasticizer as major ingredients and the total amount of the thermoplastic resin and the plasticizer in the first thermoplastic sheet 10 and the second thermoplastic sheet 11 is usually 70% by mass or more, preferably 80% by mass or more and less than 100% by mass, and more preferably 90% by mass or more and less than 100% by mass, based on the total amount of each thermoplastic sheet.

### (Coloring agent)

Both the first thermoplastic sheet 10 and the second thermoplastic sheet 11 preferably contain a coloring agent. Containing the coloring agent in the first thermoplastic sheet 10 and the second thermoplastic sheet 11 makes it possible to appropriately adjust lightness L*, chromaticity a*, and chromaticity b* thereof to obtain sufficient image clarity in a light scattering mode.

The coloring agent may be uniformly dispersed in the first thermoplastic sheet 10 and the second thermoplastic sheet 11.

The coloring agent to be used is not particularly limited, and can be a coloring matter that has been conventionally compounded into a thermoplastic sheet, such as blue, yellow, red, green, purple, white, and black coloring matters. As the coloring matter, pigments, dyes, and the like can be used. Using the coloring agent in the first thermoplastic sheet 10 and the second thermoplastic sheet 11 enables the laminated panel to be colored in a desired color, making it possible to enhance an aesthetic quality of the laminated panel.

Examples of the pigments used in the first thermoplastic sheet 10 and the second thermoplastic sheet 11 include carbon black, phthalocyanine-based pigments such as a copper phthalocyanine pigment such as pigment blue and a cobalt phthalocyanine pigment, an anthraquinone-based pigment, a perylene pigment, a diketopyrrolopyrrole-based pigment, a quinacridone-based pigment, a perinone-based pigment, a thioindigo-based pigment, an isoindoline-based pigment, an isoindolinone-based pigment, a quinophthalone-based pigment, a threne-based pigment, a dioxazine-based pigment, a pyrrocholine-based pigment, a fluorubine-based pigment, an azo-based pigment, a titanium oxide-based pigment, a calcium carbonate-based pigment, a metal oxide-based pigment, a Ni complex-based pigment, other metal complex-based pigment, and the like.

Also, examples of the dyes include an azo dye, a cyanine dye, a triphenylmethane dye, a phthalocyanine dye, an anthraquinone dye, a naphthoquinone dye, a quinoneimine dye, a methine dye, an azomethine dye, a squarylium dye, an acridine dye, a styryl dye, a coumarin dye, a quinoline dye, a nitro dye, etc. The dyes may be disperse dyes.

The pigments and dyes constituting the coloring agents described above may be compounded directly into a resin, or may be compounded into the resin after having been formed in ink or toner.

The coloring agent preferably contains a black coloring agent such as carbon black. Using the black coloring agent facilitates reduction of lightness with a small amount of coloring agent and also prevents the absolute values of a* and b* from being high, facilitating color reproducibility of image when used as a screen to be enhanced. Either one of the first thermoplastic sheet 10 and the second thermoplastic sheet 11 preferably contains the black coloring agent, and both more preferably contain the black coloring agent.

The content of the plasticizer in each of the first thermoplastic sheet 10 and the second thermoplastic sheet 11 is not particularly limited, but may be appropriately adjusted so that the visible light transmittance, L*, a*, and b* values of each thermoplastic sheet fall within the desired ranges described above.

The first thermoplastic sheet 10 and the second thermoplastic sheet 11 of the present invention may contain, in addition to the coloring agent, a variety of additives such as a heat shielding agent, an ultraviolet absorber, an antioxidant, a light stabilizer, an ultraviolet absorber, and an antioxidant

A thickness of the first thermoplastic sheet 10 is not particularly limited, but is, for example, 0.05 mm or more, preferably 0.1 mm or more, and more preferably 0.2 mm or more. Also, the thickness of the first thermoplastic sheet 10 is not particularly limited, but is, for example, 1 mm or less, preferably 0.8 mm or less, and more preferably 0.5 mm or less. The first thermoplastic sheet 10 having a thickness of the above lower limit value or more can obtain sufficient image clarity in a light scattering mode. Furthermore, the first thermoplastic sheet 10 having a thickness of the above upper limit value or less can obtain sufficient transparent visibility in a light transmission mode without increasing a thickness of the interlayer film structure 1 more than necessary.

A thickness of the second thermoplastic sheet 11 is not particularly limited, but is, for example, 0.05 mm or more, preferably 0.1 mm or more, and more preferably 0.2 mm or more. Also, the thickness of the second thermoplastic sheet 11 is not particularly limited, but is, for example, 1 mm or less, preferably 0.8 mm or less, and more preferably 0.5 mm or less. The second thermoplastic sheet 11 having a thickness of the above lower limit value or more can obtain sufficient image clarity in a light scattering mode. Also, the second thermoplastic sheet 11 having a thickness of the above upper limit value or less can obtain sufficient transparent visibility in a light transmission mode without increasing a thickness of the interlayer film structure 1 more than necessary.

The thicknesses of the first thermoplastic sheet 10 and the second thermoplastic sheet 11 are preferably thin, and particularly the first thermoplastic sheet 10 that is made thin, enhances image clarity, which is preferred.

The first thermoplastic sheet 10 and the second thermoplastic sheet 11 for use can be commercially available products, for example, "S-LEC Film" series manufactured by SEKISUI CHEMICAL CO., LTD.

### [PDLC film]

The PDLC film 20 is a light control body that can be switched in a light transmission mode and a light scattering mode. The PDLC film 20 has a higher visible light transmittance in a light transmission mode. Also, the PDLC film 20 has a lower visible light transmittance in a light scattering mode than in a light transmission mode. The haze value is also higher compared to that in the light transmission mode. In the PDLC film 20, the light transmission mode and the light scattering mode are switched depending on application or non-application of voltage.

In the present invention, the use of PDLC film is likely to increase visible light transmittance in a light transmission mode. In a light scattering mode, on the other hand, high light scattering is obtained, facilitating a haze value in the light scattering mode to be enhanced, and the use of PDLC film as a screen is likely to result in favorable image clarity.

The PDLC film 20 comprises, for example, two substrate films and a light control layer disposed between the two substrate films. Examples of the substrate films include resin films using a polyester resin such as polyethylene terephthalate or polyethylene naphthalate, an acrylic resin, a cellulose derivative such as triacetyl cellulose (TAC), a polyethersulfone (PES) resin, or a polyimide resin as a resin component. Of these, the polyester resin film is preferred from the viewpoint of handleability or the like, and of these, the polyethylene terephthalate film is more preferred.

Also, each of the two substrate films is preferably provided with an electrode layer on a surface on the light control layer side. The electrode layer is not particularly limited for use as long as it is an electrode material having conventional transparency, and examples thereof include an indium tin oxide (ITO) conductive film, a tin oxide conductive film, a zinc oxide conductive film, a polymer conductive film, and the like. Of these, the ITO conductive film is preferable. The electrode layer is connected with an extraction electrode, and voltage may be applied between the electrode layers via the extraction electrodes.

The light control layer in the PDLC film 20 is, for example, a liquid crystal layer, and the liquid crystal layer of the PDLC film 20 is composed of a polymer-dispersed liquid crystal (PDLC). An example of the polymer-dispersed liquid crystal includes those called a network-type liquid crystal, in which a network structure is formed by a polymer in the liquid crystal layer.

An example of the liquid crystal layer includes a layer in which a space for filling an inside thereof with the liquid crystal is formed by using a spacer or the like and the space is filled with the liquid crystal and sealed, but the spacer may not be used. The liquid crystal may also be of any type, and may be of a TN type or a STN type. An orientation film may be appropriately provided between the light control layer and the electrode layer. The PDLC film 20 provided with the orientation film can be of a reverse type, which will be described later.

The PDLC film 20 being applied voltage between the electrode layers changes an orientation state of the liquid crystal layer and is switched between light transmission and light scattering. The PDLC film 20 may be of either a normal type or a reverse type. The normal type operates in a light transmission mode when applied voltage (voltage ON) and operates in a light scattering mode when applied no voltage (voltage OFF), while the reverse type operates in a light transmission mode when applied no voltage and operates in a light scattering mode when applied voltage.

As described above, the PDLC film 20 has high visible light transmittance and a small haze value in the light transmission mode. The PDLC film 20 has specific visible light transmittance in a light transmission mode of, for example, 60% or more, preferably 70% or more, and more preferably 75% or more. By having the above-described visible light transmittance, light transmittance of the laminated panel structure can be increased sufficiently in a light transmission mode, and when in use, for example, in roof glass of an automobile, a sufficient feeling of openness can be obtained.

Also, the haze value of the PDLC film 20 in a light transmission mode is, for example, 30% or less, preferably 20% or less, and more preferably 10% or less.

It is to be noted that the visible light transmittance of the PDLC film 20 in a light transmission mode may be 100% or less and practically 99% or less, and the haze value thereof may be 0% or more and practically, for example, 1% or more.

In a light scattering mode, on the other hand, the haze value of the PDLC film 20 is, for example, 70% or more, preferably 80% or more, and more preferably 90% or more. Such a high haze value in the light scattering mode causes a high light shielding property and can appropriately prevent inflow of heat rays in the light scattering mode. Also, sufficient image clarity can be obtained when in use as a screen.

Also, in a light scattering mode, the visible light transmittance of the PDLC film 20 is lower than that in the light transmission mode, which is for example, 40% or less, preferably 20% or less, and more preferably 10% or less. As described above, when the light transmittance is lowered in the light scattering mode, inflow of heat rays can be appropriately prevented in the light scattering mode. Also, the PDLC film 20 can obtain sufficient image clarity when used as a screen.

It is to be noted that the haze value of the PDLC film 20 in a light scattering mode may be 100% or less and is practically approximately 99% or less. The visible light transmittance may also be 0% or more and is practically approximately 1% or more.

The PDLC film 20 operates in either a light scattering mode or a light transmission mode when applied no voltage, and in that mode, the haze value and visible light transmittance may fall within the above-described ranges. In a state of voltage application, the PDLC film 20 also operates in the other mode of the light scattering mode and the light transmission mode, and in that mode, the haze value and visible light transmittance may be as described above, but the voltage value applied is not limited, and the haze value and visible light transmittance may be those described above at any voltage value.

It is to be noted that the visible light transmittance of the PDLC film 20 may be measured using a spectrophotometer in accordance with JIS R 3106:2019. The haze value may also be measured using a haze meter (for example, "TC-HIIIDPK" manufactured by TokyoDenshoku Co., Ltd.) in accordance with JIS K 6714.

A thickness of the PDLC film 20 is not particularly limited, and is, for example, 0.05 mm or more and 2 mm or less, preferably 0.1 mm or more and 1 mm or less, and more preferably 0.2 mm or more and 0.8 mm or less.

The PDLC film 20 for use may be a commercially available product. Specific examples thereof include a normal type of the "LC MAGIC" series manufactured by Toppan Printing Co., Ltd. [in a light transmission mode: a haze value 5%, parallel ray transmittance 82%, and in a light scattering mode: a haze value 98%, parallel ray transmittance 1% (catalogue value)] and a reverse type [in a light transmission mode: a haze value 10%, parallel ray transmittance 80%, and in a light scattering mode: a haze value 92%, parallel ray transmittance 7% (catalogue value)]. Furthermore, examples thereof include a window type of "UMU" manufactured by NSG UMU PRODUCTS CO.,LTD. [in a light transmission mode: a haze value 6%, parallel ray transmittance 74%, and in a light scattering mode: a haze value 86%, parallel ray transmittance 5% (catalogue value)] and the like. Other examples thereof include "LC-W" manufactured by Gauzy Ltd. and the like.

### [Switch]

The interlayer film structure 1 may comprise a switch member (not shown). The switch member is a member for controlling the PDLC film 20. The switch member may control whether or not voltage is applied between electrode layers of the PDLC film 20 by a switch input. This allows the switch member to switch the PDLC film 20 in a light transmission mode and a light scattering mode.

The switch member may be disposed outside the interlayer film structure 1, and is preferably composed of a touch sensor disposed inside the interlayer film structure 1. Therefore, the PDLC film 20 is preferably controlled by the touch sensor.

### [Adhesive layer]

For example, the interlayer film structure 1 may be provided with an adhesive layer (not shown) at least either between the first thermoplastic sheet 10 and the PLDC film 20 or between the second thermoplastic sheet 11 and the PLDC film 20, and the PLDC film 20 may be adhered to at least one of the first thermoplastic sheet 10 and the second thermoplastic sheet 11 via the adhesive layer. With the proviso that the PLDC film 20 is preferably directly adhered to the first thermoplastic sheet 10, whereas no adhesive layer is provided between these sheets. Similarly, the PLDC film 20 is preferably directly adhered to the second thermoplastic sheet 11.

Also, for example, the interlayer film structure 1 may be provided with an adhesive layer on the outer side of at least either of the first thermoplastic sheet 10 and the second thermoplastic sheet 11, and at least either of the first thermoplastic sheet 10 and the second thermoplastic sheet 11 may be adhered to the transparent panels 30 and 31 via the adhesive layer. However, it is preferable that no adhesive layer is provided on the outer side of the first thermoplastic sheet 10, and that the first thermoplastic sheet 10 is directly adhered to the transparent panel 30. It is similarly preferable that no adhesive layer is provided on the outer side of the second thermoplastic sheet 11, and that the second thermoplastic sheet 11 is directly adhered to the transparent panel 31.

The adhesive layer is not particularly limited and may be composed of a known material, for example, the above-described thermoplastic resin.

In producing the interlayer film structure of the present invention, first, a PLDC film and resin films for forming a first and second thermoplastic sheets are prepared.

The PLDC film and the resin films may then be appropriately overlaid. For example, in the case of one PLDC film as shown in Fig. 1, two resin films may be prepared and overlaid in order of the resin film / the PLDC film / the resin film. In the case of two PLDC films, three resin films may be prepared and overlaid in order of the resin film / the PLDC film / the resin film / the PLDC film / the resin film. In the case of three or more PLDC films, the resin film / the PLDC film may be alternately stacked in a similar manner.

Also, in a case in which an adhesive layer is provided between the PLDC film and the first and second thermoplastic sheets, on a surface of the interlayer film structure, or the like, a resin film for forming an adhesive layer may be prepared and appropriately overlaid.

As described above, a laminate obtained by overlaying the PLDC film and the resin film can be pressed in a thickness direction or undergo thermocompression under a negative pressure to produce an interlayer film structure.

### [Optical properties of interlayer film structure for laminated panel]

### (Visible light transmittance with PDLC film in light scattering mode)

Regarding the interlayer film structure 1, in a laminated panel structure produced under specified conditions using the interlayer film structure 1 of the present invention, the visible light transmittance measured with the PDLC film 20 in a light scattering mode is preferably 2% or less. Also, the visible light transmittance is more preferably 0.1% or more and 1% or less and more preferably 0.2% or more and 1% or less.

As described above, the visible light transmittance so as to be adjusted to 2% or less sufficiently shields visible light in the interlayer film structure 1, and prevents an interior side of a vehicle from being irradiated with sunlight when the interlayer film structure 1 is used, for example, in window glass for automobiles, particularly roof glass for automobiles. Also, when the visible light transmittance is 0.1% or more, a certain amount of visible light is transmitted, thereby preventing the interlayer film structure 1 from being completely shaded and providing a certain feeling of openness.

It is to be noted that the laminated panel structure produced under specified conditions refers to a laminated panel structure obtained by bonding two sheets of standard clear glass having a thickness of 2.5 mm via the interlayer film structure 1.

### (Visible light transmittance with PDLC film in light transmission mode)

Regarding the interlayer film structure 1, in a laminated panel structure produced under specified conditions using the interlayer film structure 1 of the present invention, the visible light transmittance measured with the PDLC film 20 in a light transmission mode is, for example, 3% or more from the viewpoint of being capable of viewing outside through the laminated panel structure, but preferably 10% or more. Also, the visible light transmittance measured with the PDLC film 20 in a light transmission mode is more preferably 15% or more and still more preferably 20% or more. The visible light transmittance is also preferably 60% or less, more preferably 50% or less, and still more preferably 40% or less.

When the PDLC film 20 operates in the light transmission mode, a visible light transmittance of 10% or more allows an outside to be easily seen through the laminated panel structure. Also, a large amount of external light can be brought inside through the laminated panel structure, so that a certain amount of external light can be brought in even in bad weather or at night, providing a feeling of openness even in such environments.

### <Laminated panel structure>

As shown in Fig. 1, the laminated panel structure 100 of the present invention comprises the interlayer film structure 1 described above and the two transparent panels 30 and 31, and the interlayer film structure 1 is disposed with being sandwiched between the two transparent panels 30 and 31. In the laminated panel structure 100, the two transparent panels 30 and 31 are bonded via the interlayer film structure 1 described above.

Examples of the transparent panels 30 and 31 include glass plates. The glass plate may be either inorganic glass or organic glass, but preferably inorganic glass. Examples of the inorganic glasses include, but are not particularly limited to, clear glass, clear float glass, a float glass plate, tempered glass, colored glass, a polished glass plate, a patterned glass plate, a wired glass plate, a lined glass plate, an ultraviolet absorbing glass plate, an infrared reflecting glass plate, an infrared absorbing glass plate, green glass, etc.

As the organic glass, glass generally called resin glass is used, and examples thereof include, but are not particularly limited to, organic glass composed of a polycarbonate plate, a polymethyl methacrylate plate, a polyester plate and the like.

The two transparent panels 30 and 31 may be composed of the same material or different materials. For example, one panel may be inorganic glass and the other organic glass, but both of the two transparent panels 30 and 31 are preferably inorganic glass or organic glass, and more preferably inorganic glass.

A thickness of each of the transparent panels 30 and 31 is not particularly limited, but is preferably 0.5 mm or more and 3.2 mm or less, more preferably 0.7 mm or more and 2.7 mm or less, and still more preferably 1.0 mm or more and 2.6 mm or less. The thickness within the above range keeps a thickness of the entire laminated panel structure below a certain level while imparting a certain mechanical strength to the laminated panel structure 100.

The laminated panel structure 100 of the present invention preferably has a thickness of 7 mm or less. When the thickness is 7 mm or less, the laminated panel structure 100 can be suitably used for window glass for automobiles, particularly roof glass for automobiles. Also, the lower limit value of the thickness of the laminated panel structure is not particularly limited, but is, for example, 4 mm or more and preferably 5 mm or more.

### (Method for producing laminated panel structure)

The method for producing a laminated panel structure is not particularly limited, and it can be obtained, for example, by disposing the interlayer film structure between two transparent panels, which undergoes thermocompression using an autoclave or the like.

Also, in the present invention, a laminated panel structure may be produced while forming an interlayer film structure. Specifically, the PDLC film and the resin films of the first and second thermoplastic sheets may be appropriately overlaid and undergo thermocompression using an autoclave or the like in a state where the resulting laminate overlaid is disposed between the two transparent panels, then to obtain a laminated panel structure while forming an interlayer film structure.

### [Applications]

The interlayer film structure 1 and the laminated panel structure 100 of the present invention can be used for window glass of various vehicles such as automobiles, aircraft, ships and buildings, but are preferably used for vehicles.

In automobiles, heat rays from an exterior side of the vehicle may flow into the vehicle through window glass, making an interior side of the vehicle hot. Similarly, in buildings, heat rays may flow into a building through window glass, making an interior side of the building hot; however, the interlayer film structure of the present invention, which is shielded in appropriate combination of modes of the PDLC film can appropriately prevent heat rays from flowing interior side of the vehicle or building.

The interlayer film structure 1 and the laminated panel structure 100 of the present invention are also particularly preferably used in automobiles, and when used therein, they can be used for any window glass such as side glass, rear glass, or roof glass. As shown in Fig. 2, the interlayer film structure 1 and the laminated panel structure 100 are preferably used as roof glass at a roof portion 111 of an automobile 110. The interlayer film structure 1 and the laminated panel structure 100 of the present invention, which are used as roof glass have a likelihood of further providing a feeling of openness.

At least a portion of the roof glass may be disposed on a roof, and for example, glass disposed across the roof and a rear portion is also regarded as roof glass. It is to be noted that a roof of an automobile is a portion constituting a top surface of the body, and roof glass is generally disposed horizontally or slightly tilted (for example, within 20°) with respect to the horizontal direction. The tilt is a tilt of a straight line to the horizontal direction, which is connected between an end of the glass disposed at a roof position and the other end thereof.

Also, the roof glass has an area of, for example, 0.5 mm² or more, preferably 1 m² or more, and more preferably 1.5 m² or more.

The interlayer film structure 1 and laminated panel structure 100 of the present invention may be used by appropriately switching the PDLC film 20 in a light transmission mode and a light scattering mode to appropriately adjust its visible light transmittance.

For example, when it is desired to shield light from outside or to use a roof or the like as a screen, the PDLC film 20 may operate in a light scattering mode. When the light scattering mode is selected, it is difficult to see outside through the laminated panel structure 100, but the function as a screen is enhanced.

When it is desired to see outside through the laminated panel structure 100 or to obtain a feeling of openness, on the other hand, the PDLC film 20 may operate in a light transmission mode.

### <Projection system for automobile roof glass>

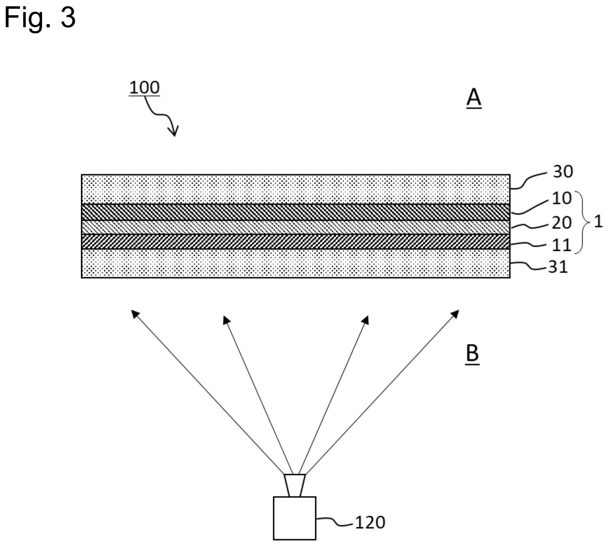

As shown in Fig. 3, the projection system for automobile roof glass of the present invention comprises the above-described laminated panel structure 100 and a light source 120 that projects an image onto the laminated panel structure 100.

The light source 120 is provided interior side of a vehicle (indoor side B). The light source 120 is not particularly limited, but may be provided inside a dashboard or on top of the dashboard. Also, the light source 120 may be provided, for example, behind a rear seat, on a roof portion, or between a front seat and a rear seat. The light source 120 for use may be, for example, a projector capable of projecting various images, and may be a full-color (RGB) projector or a projector that irradiates monochromatic light such as an LED projector. It may also be an Ultra-Short-Throw (UST) projector and the like. An image display system using a digital mirror device, known as a so-called DLP (registered trademark) projector, and the like may also be used.

Also, when displaying an image of a fixed icon, a fixed message, or the like without changing their images to be displayed, it is not necessary to use a projector, and the light source 120 that irradiates the laminated panel structure with constant light corresponding to the images, may be used.

The projection system described above has been described as an example in which the laminated panel structure 100 is applied to roof glass for automobiles, but it does not have to be applied to the roof glass for automobiles, and may be applied to other glass for automobiles, for example, side glass or rear glass. It may also be used for other than automobiles, for vehicles other than automobiles, or for architecture.

### Examples

The present invention will be described in more detail with reference to Examples, however, the present invention is not limited to these examples.

### <Measurement method>

The lightness (L*), chromaticity (a*b*), and visible light transmittance of the first thermoplastic sheet and the second thermoplastic sheet were measured by the following method using laminated glass for measurement produced from each sheet as described in the description. It is to be denoted that the conditions upon production of the laminated glass for measurement were the same as those upon production of the laminated panel structure described below.

The visible light transmittance of the laminated panel structure was also measured by the following method.

### [L*a*b* measurement]

Optical spectra of the laminated glass were measured using a spectrophotometer ("U-4100" manufactured by Hitachi High-Technologies Corporation) in accordance with JIS R 3212:2015. Upon measurement, the laminated glass was placed 13 cm away from an integrating sphere so that only parallel light transmitted through the laminated glass was received by the integrating sphere and the laminated glass is parallel to the normal of an optical axis on the optical path between the light source and the integrating sphere, to measure spectral transmittance. The measurement conditions also include a scan speed of 300 nm/min and a slit width of 8 nm, and other measurement conditions include CIE standard illuminant D65 and a 10° field of view color matching function, specified in JIS Z 8781-1:2012, JIS Z 8781-2:2012, and JIS Z 8781-4:2013, and L*, a*, and b* were then measured.

### [Visible light transmittance (Tv)]

Visible light transmittance (Tv) was measured using a spectrophotometer (product name "U-4100" manufactured by Hitachi High-Technologies Corporation) in accordance with JIS R 3106:2019.

### <Evaluation method>

### [Image clarity]

The laminated panel structures obtained in Examples and Comparative Examples were evaluated for image clarity in a light scattering mode of the PDLC film. Specifically, the laminated panel structures obtained in Examples and Comparative Examples were each placed on a roof of a virtual automobile installed outdoors on a sunny day. Then, with the PDLC film of the laminated panel structure turned OFF (in a light scattering mode), an image was projected onto the laminated panel structure from interior side of the automobile using a high-brightness projector (product name "ML1050ST+", manufactured by Optoma Corporation), and image clarity when viewed from interior side of the automobile was visually evaluated using the following criteria.
A: The projected image is clearly visible.
B: The projected image is blurred but visible.
C: The projected image is blurred and is not visible.

### [Transmission visibility]

The laminated panel structures obtained in Examples and Comparative Examples were evaluated for transmission visibility in a light transmission mode of the PDLC film. Specifically, the laminated panel structures obtained in Examples and Comparative Examples were each placed on a roof of a virtual automobile installed outdoors on a sunny day. Then, with the PDLC film of the laminated panel structure turned ON (in a light transmission mode), an outdoor view was observed from the indoor side through the laminated panel structure and evaluated using the following criteria:
A: The outdoor view is clearly visible.
B: The outdoor view is somewhat dark but clearly visible.
C: The outdoor view is not visible, or is visible but not clearly visible.

### [Example 1]

First, the following materials were prepared.
- First thermoplastic sheet: A PVB film with a thickness of 0.76 mm (product name "S-LEC Film #7008" (Gray), manufactured by SEKISUI CHEMICAL CO., LTD.)
- Second thermoplastic sheet: A PVB film with a thickness of 0.76 mm (product name "S-LEC Film #7013" (Gray), manufactured by SEKISUI CHEMICAL CO., LTD.)
- PDLC film: A polymer-dispersed liquid crystal film with a thickness of 0.38 mm (product name "PDLC-A" manufactured by Gauzy Co., Ltd.). It operates in a light scattering mode with voltage OFF and operates in a light transmission mode with voltage ON (70V).
- Transparent panel: Standard clear glass with a thickness of 2.5 mm, as described in the description

The first thermoplastic sheet, PDLC film, and second thermoplastic sheet were overlaid in this order, underwent thermocompression at 70°C and -780 mbar (gauge pressure), and then integrated to obtain an interlayer film structure for a laminated panel. Next, on a transparent panel, the resulting interlayer film structure for a laminated panel and another transparent panel were overlaid and integrated together under the conditions of 90°C and 3 bar (gauge pressure) using an autoclave to obtain a laminated panel structure. As shown in Fig. 1, the laminated panel structure had a laminated structure of the transparent panel / the first thermoplastic sheet / the PDLC film / the second thermoplastic sheet / the transparent panel.

### [Example 2]

The same materials as in Example 1 were used, except that the first thermoplastic sheet and the second thermoplastic sheet were changed to those shown below.
- First thermoplastic sheet: A PVB film with a thickness of 0.38 mm (product name "S-LEC Film #9048" (Bronze), manufactured by SEKISUI CHEMICAL CO., LTD.)
- Second thermoplastic sheet: A PVB film with a thickness of 0.76 mm (product name "S-LEC Film #7082" (Gray), manufactured by SEKISUI CHEMICAL CO., LTD.)

### [Example 3]

The same materials as in Example 1 were used, except that the first thermoplastic sheet and the second thermoplastic sheet were changed to those shown below.
- First thermoplastic sheet: A PVB film with a thickness of 0.38 mm (product name "S-LEC Film #7030" (Gray), manufactured by SEKISUI CHEMICAL CO., LTD.)
- Second thermoplastic sheet: A PVB film with a thickness of 0.76 mm (product name "S-LEC Film #7082" (Gray), manufactured by SEKISUI CHEMICAL CO., LTD.)

### [Example 4]

The same materials as in Example 1 were used, except that the first thermoplastic sheet and the second thermoplastic sheet were changed to those shown below.
- First thermoplastic sheet: A PVB film with a thickness of 0.38 mm (product name "S-LEC Film #5035" (Green), manufactured by SEKISUI CHEMICAL CO., LTD.)
- Second thermoplastic sheet: A PVB film with a thickness of 0.76 mm (product name "S-LEC Film #7082" (Gray), manufactured by SEKISUI CHEMICAL CO., LTD.)

### [Comparative Example 1]

The same materials as in Example 1 were used, except that the first thermoplastic sheet and the second thermoplastic sheet were changed to those shown below.
- First thermoplastic sheet: A PVB film with a thickness of 0.76 mm (product name "38CLR", manufactured by SEKISUI CHEMICAL CO., LTD.)
- Second thermoplastic sheet: A PVB film with a thickness of 0.76 mm (product name "S-LEC Film #7018" (Gray), manufactured by SEKISUI CHEMICAL CO., LTD.)

### [Comparative Example 2]

The same materials as in Example 1 were used, except that the first thermoplastic sheet and the second thermoplastic sheet were changed to those shown below.
- First thermoplastic sheet: A PVB film with a thickness of 0.76 mm (product name "S-LEC Film #7002" (Gray), manufactured by SEKISUI CHEMICAL CO., LTD.)
- Second thermoplastic sheet: A PVB film with a thickness of 0.76 mm (product name "S-LEC Film #7008" (Gray), manufactured by SEKISUI CHEMICAL CO., LTD.)

### [Comparative Example 3]

The same materials as in Example 1 were used, except that the first thermoplastic sheet and the second thermoplastic sheet were changed to those shown below.
- First thermoplastic sheet: A PVB film with a thickness of 0.76 mm (product name "S-LEC Film #8174" (Gray), manufactured by SEKISUI CHEMICAL CO., LTD.)
- Second thermoplastic sheet: A PVB film with a thickness of 0.76 mm (product name "S-LEC Film #6001" (Blue), manufactured by SEKISUI CHEMICAL CO., LTD.)

For the laminated panel structures obtained in Examples and Comparative Examples, the visible light transmittance of the PDLC films in a light transmission mode were measured. The results are shown in Table 1.

**Table 1**

| | | | Example 1 | Example 2 | Example 3 | Example 4 | Comparative Example 1 | Comparative Example 2 | Comparative Example 3 |
|---|---|---|---|---|---|---|---|---|---|
| Transparent panel on an outdoor side | Type | | 2.5CLR | 2.5CLR | 2.5CLR | 2.5CLR | 2.5CLR | 2.5 CLR | 2.5CLR |
| | Thickness (mm) | | 2.5 | 2.5 | 2.5 | 2.5 | 2.5 | 2.5 | 2.5 |
| First thermoplastic sheet | Type | | Grey (#7008) | Bronze (#9048) | #7030 (Grey) | #5035 (Green) | 38 CLR | Grey (#7002) | Grey (#8174) |
| | Thickness (mm) | | 0.76 | 0.38 | 0.38 | 0.38 | 0.76 | 0.76 | 0.76 |
| PDLC film | Type | | PDLC-A | PDLC-A | PDLC-A | PDLC-A | PDLC-A | PDLC-A | PDLC-A |
| | Thickness (mm) | | 0.38 | 0.38 | 0.38 | 0.38 | 0.38 | 0.38 | 0.38 |
| Second thermoplastic sheet | Type | | Grey (#7013) | Grey (#7082) | #7082 (Grey) | #7082 (Grey) | Grey (#7018) | Grey (#7008) | Blue (#6001) |
| | Thickness (mm) | | 0.76 | 0.76 | 0.76 | 0.76 | 0.76 | 0.76 | 0.76 |
| Transparent panel on an indoor side | Type | | 2.5CLR | 2.5CLR | 2.5CLR | 2.5CLR | 2.5CLR | 2.5 CLR | 2.5CLR |
| | Thickness (mm) | | 2.5 | 2.5 | 2.5 | 2.5 | 2.5 | 2.5 | 2.5 |
| Color measurement | First thermoplastic sheet | Tv₁ | 8.0 | 48.0 | 30.0 | 35.0 | 88.9 | 2.0 | 74.0 |
| | | L* | 33.6 | 74 | 63.8 | 65.9 | 95.6 | 12.5 | 89.4 |
| | | a* | -4.1 | 0.5 | -4 | -15.1 | -1.4 | -4.4 | -0.9 |
| | | b* | 4 | 9 | 2 | -1.1 | 1.1 | 4.3 | -0.9 |
| | Second thermoplastic sheet | Tv₂ | 13.0 | 84.1 | 84.1 | 84.1 | 18.0 | 8.0 | 84.0 |
| | | L* | 43.6 | 73.4 | 73.4 | 73.4 | 49.7 | 33.6 | 94.3 |
| | | a* | -5 | -0.7 | -0.7 | -0.7 | -4.6 | -4.1 | -6.1 |
| | | b* | 3.3 | 1.2 | 1.2 | 1.2 | 3.2 | 4 | 0.2 |
| Visible light transmittance | Transmittance difference (Tv₂-Tv₁) | ΔTv | 5 | 36.1 | 54.1 | 49.1 | -70.9 | 6 | 10 |
| | Transmittance in a light transmission mode | Tv | 0.5 | 35.1 | 24.1 | 26.3 | 15.3 | 0.1 | 47 |
| Evaluation | Image clarity | | A | B | A | B | C | B | C |
| | Transmission visibility | | B | A | A | A | B | C | A |

As shown in Table 1, the laminated panel structures of Examples 1 to 4 satisfy the conditions that the lightness L* of the first thermoplastic sheet and the second thermoplastic sheet are both 90 or less, and the visible light transmittance of the first thermoplastic sheet is lower than the visible light transmittance of the second thermoplastic sheet, enabling the favorable image clarity to be obtained. Also, in the laminated panel structures of Examples 1 to 4, the visible light transmittance of the second thermoplastic sheet was 10% or more, enabling the favorable transparent visibility to be obtained.

In contrast, the laminated panel structure of Comparative Example 1 does not satisfy the condition that the visible light transmittance of the first thermoplastic sheet is lower than the visible light transmittance of the second thermoplastic sheet, so that the sufficient image clarity could not be obtained. In the laminated panel structure of Comparative Example 2, the visible light transmittance of the second thermoplastic sheet was not 10% or more, so that the sufficient transparent visibility could not be obtained. The laminated panel structure of Comparative Example 3 does not satisfy the conditions that the lightness L* of the first thermoplastic sheet and the second thermoplastic sheet are both 90 or less, so that the sufficient image clarity could not be obtained.

### Reference Signs List

1 interlayer film structure for a laminated panel (interlayer film structure)
10 first thermoplastic sheet
11 second thermoplastic sheet
20 polymer-dispersed liquid crystal film (PDLC film)
30, 31 transparent panels
100 laminated panel structure
110 automobile
111 roof portion
120 light source

## Claims

1. An interlayer film structure for a laminated panel, to be used with being sandwiched between two transparent panels, comprising:
a first thermoplastic sheet disposed on an outdoor side; a second thermoplastic sheet disposed on an indoor side; and a polymer-dispersed liquid crystal film arranged between the first thermoplastic sheet and the second thermoplastic sheet,
lightness L* of the first thermoplastic sheet and the second thermoplastic sheet being 90 or less,
a visible light transmittance of the first thermoplastic sheet being lower than a visible light transmittance of the second thermoplastic sheet, and
the visible light transmittance of the second thermoplastic sheet being 10% or more.

2. The interlayer film structure for a laminated panel according to claim 1, wherein the visible light transmittance of the first thermoplastic sheet is 50% or less.

3. The interlayer film structure for a laminated panel according to claim 1, wherein a visible light transmittance measured of the polymer-dispersed liquid crystal film in a light transmission mode is 20% or less.

4. The interlayer film structure for a laminated panel according to claim 1, for an automobile.

5. A laminated panel structure comprising the interlayer film structure for a laminated panel according to any one of claims 1 to 4 and two transparent panels,
wherein the interlayer film structure for a laminated panel is disposed with being sandwiched between the two transparent panels.

6. The laminated panel structure according to claim 5, for roof glass.

7. A projection system for automobile roof glass, comprising:
the laminated panel structure according to claim 6 for roof glass, and
a light source that projects an image onto the laminated panel structure.
